(19) Europäisches Patentamt
European Patent Office
Office européen des brevets

(11) **EP 2 667 200 A2**

(12) **EUROPÄISCHE PATENTANMELDUNG**

(43) Veröffentlichungstag:
**27.11.2013 Patentblatt 2013/48**

(51) Int Cl.:
*G01P 13/02* (2006.01)    *G01P 5/14* (2006.01)
*G01L 9/06* (2006.01)

(21) Anmeldenummer: **13168281.7**

(22) Anmeldetag: **17.05.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.05.2012   DE 102012104366**

(71) Anmelder: **Deutsches Zentrum für Luft- und Raumfahrt e.V.**
**51147 Köln (DE)**

(72) Erfinder:
• **Abildgaard, Max**
  **38108 Braunschweig (DE)**
• **Wagner, Hannes**
  **65929 Frankfurt (DE)**

(74) Vertreter: **Günther, Constantin et al**
**Gramm, Lins & Partner GbR**
**Freundallee 13a**
**30173 Hannover (DE)**

(54) **Anströmrichtungssensoreinrichtung und Anströmrichtungserfassungseinrichtung**

(57)    Die Erfindung betrifft eine Anströmrichtungssensoreinrichtung (1) zur Messung einer Anströmrichtung (2), mit der ein strömendes Medium die Anströmrichtungssensoreinrichtung anströmt. Die Einrichtung weist eine Vielzahl von Drucksensoreinrichtungen (3) auf, die entlang des vorgesehenen Umströmungsverlaufs (30) der Anströmrichtungssensoreinrichtung hintereinander angeordnet sind. Dabei weisen die Drucksensoreinrichtungen wenigstens ein Druckübersetzungselement (5, 6, 7, 8, 70, 120, 150) auf, das zwischen dem zu erfassenden Medium und einem Sensorelement (9, 16, 17, 18) angeordnet ist. Das Druckübersetzungselement weist eine Erfassungsfläche (7) und eine mit der Erfassungsfläche kraftübertragend gekoppelte Kraftabgabefläche (8) auf, wobei die Kraftabgabefläche mit dem Sensorelement kraftübertragend gekoppelt ist.

Die Erfindung betrifft außerdem eine Anströmrichtungserfassungseinrichtung welche wenigstens eine derartige Anströmrichtungssensoreinrichtung aufweist.

Fig. 4

Printed by Jouve, 75001 PARIS (FR)

**Beschreibung**

Die Erfindung betrifft eine Anströmrichtungssensoreinrichtung zur Messung einer Anströmrichtung, mit der ein strömendes Medium die Anströmrichtungssensoreinrichtung anströmt, gemäß dem Oberbegriff des Anspruchs 1. Die Erfindung betrifft außerdem eine Anströmrichtungserfassungseinrichtung gemäß Anspruch 13.

In verschiedenen Bereichen der Technik ist es erforderlich, eine Anströmrichtung zu bestimmen, mit der ein strömendes Medium einen Gegenstand anströmt. Hierfür sind Sensoreinrichtungen bekannt, mit denen die Anströmrichtung bzw. ein Anströmwinkel in Bezug zu einer Referenzrichtung gemessen werden kann. Anwendungsbereiche gibt es beispielsweise in der Luftfahrt, bei der Wettererfassung oder bei der Erfassung der Strömungsverhältnisse hydraulischer Medien. Im Bereich der Luftfahrt gibt es so genannte Anströmwinkelsensoren, die auch als Angle of Attack (AOA) Sensoren bezeichnet werden und beispielsweise zur Messung des Anstellwinkels eines Flugzeugs benötigt werden. Deren übliche Bauweise besteht darin, dass ein Drehgeber, z. B. ein Potentiometer, mit einer Windfahne versehen ist. Die Windfahne wird dabei außerhalb des Flugzeugs angeordnet. Durch den Verdrehwinkel der Windfahne wird das von dem Potentiometer abgegebene Signal beeinflusst, so dass hieraus die Anströmrichtung bestimmt werden kann.

Der zuvor beschriebene Anströmwinkelsensor ist vom Aufbau her relativ aufwendig und teuer. Die Windfahne ist zudem empfindlich gegenüber Beschädigungen und zudem prinzipbedingt träge.

Der Erfindung liegt die Aufgabe zugrunde, eine einfache und kostengünstige Anströmungssensoreinrichtung anzugeben, die robust realisierbar ist.

Diese Aufgabe wird gemäß Anspruch 1 gelöst durch eine Anströmrichtungssensoreinrichtung zur Messung einer Anströmrichtung, mit der ein strömendes Medium die Anströmrichtungssensoreinrichtung anströmt, wobei die Anströmrichtungssensoreinrichtung dazu eingerichtet ist, von dem strömenden Medium umströmt zu werden, mit wenigstens einem Trägerkörper und einer Vielzahl von Drucksensoreinrichtungen, die an der Außenfläche des Trägerkörpers angeordnet sind oder in dem Trägerkörper angeordnet und mit der Au ßenfläche des Trägerkörpers verbunden sind, wobei die Drucksensoreinrichtungen entlang des vorgesehenen Umströmungsverlaufs der Anströmrichtungssensoreinrichtung hintereinander angeordnet sind, wobei eine, mehrere oder alle Drucksensoreinrichtungen wie folgt ausgebildet sind:

a) die Drucksensoreinrichtung weist wenigstens ein Sensorelement auf, das dazu eingerichtet ist, eine in Abhängigkeit von einer auf das Sensorelement ausgeübten Kraft variable elektrische Kenngröße auszugeben,
b) die Drucksensoreinrichtung weist wenigstens ein Druckübersetzungselement auf, das zwischen dem zu erfassenden Medium und dem Sensorelement angeordnet ist,
c) das Druckübersetzungselement weist eine für eine Druckbeaufschlagung durch das zu erfassende Medium eingerichtete Erfassungsfläche auf, die an einer Erfassungsseite des Druckübersetzungselements angeordnet ist,
d) das Druckübersetzungselement weist eine mit der Erfassungsfläche kraftübertragend gekoppelte Kraftabgabefläche auf, die an einer von der Erfassungsseite abgewandten Stelle des Druckübersetzungselements angeordnet ist,
e) die Kraftabgabefläche ist mit dem Sensorelement kraftübertragend gekoppelt zur Übertragung einer von dem Medium auf die Erfassungsfläche ausgeübten Kraft auf das Sensorelement.

Die Erfindung hat den Vorteil, dass einfache und kostengünstige Sensorelemente eingesetzt werden können, wie z. B. auf dem Markt verfügbare miniaturisierte Drucksensoren oder Kraftsensoren. Als Sensorelemente kommen Drucksensoren oder Kraftsensoren nach allen hierfür bekannten physikalischen Prinzipien in Frage.

Die erfindungsgemäße Anströmungssensoreinrichtung eignet sich für alle Arten strömender Medien, wie z. B. Luft und andere Gase, hydraulische Medien, wie Wasser und Öl, sowie auch für aggressive und ätzende Medien.

Ein weiterer Vorteil ist, dass bei der erfindungsgemäßen Anströmungssensoreinrichtung keine mechanisch durch das strömende Medium in nennenswertem Maße zu bewegenden Bauteile wie die Windfahne vorgesehen werden müssen. Von den Druckübersetzungselementen ausgeführte Bewegungen liegen im Mikrometerbereich und sind daher vernachlässigbar. Hierdurch kann die Anströmungssensoreinrichtung sehr robust und beschädigungsunempfindlich ausgebildet werden. Zudem kann die Anströmungssensoreinrichtung kompakter und verschleißärmer als bekannte Anströmungssensoreinrichtungen ausgebildet werden. Die Messung findet zudem direkt an der Oberfläche statt.

Hierbei weist die Anströmungssensoreinrichtung einen Trägerkörper und eine Vielzahl von Drucksensoreinrichtungen auf, die an der Außenfläche des Trägerkörpers angeordnet sind oder in dem Trägerkörper angeordnet und mit der Außenfläche des Trägerkörpers verbunden sind. Hierdurch wird ein Strömungskörper gebildet, der zur Umströmung durch das strömende Medium vorgesehen ist. Entlang des vorgesehenen Umströmungsverlaufs sind mehrere Drucksensoreinrichtungen vorgesehen, die entlang des Umströmungsverlaufs hintereinander angeordnet sind. Dies erlaubt eine Messung der Anströmrichtung des strömenden Mediums durch Auswertung der Sensordaten der mehreren Drucksensoreinrichtungen. Die Auflösung und Messgenauigkeit zur Messung der Anströmrichtung steigt grundsätzlich mit der Anzahl bzw. der Dichte der Drucksensoreinrichtungen pro Flächeneinheit. Eine zusätzliche Steigerung der Auflösung und Messgenauigkeit kann durch Interpolation von Sensordaten zweier benachbarter Drucksensoreinrichtungen erzielt werden. Auf diese Weise können auch Zwischenwerte der Anströmrichtung gemessen werden, die nicht genau der Lage der Drucksensoreinrichtungen an dem Trägerkörper entsprechen.

Ein weiterer Vorteil ist, dass die Messung der Anströmrichtung auch zeitlich akkurater erfolgen kann als bei bekannten Windfahnen-Anströmwinkelmessern. Da die Windfahne massebehaftet ist, erfolgt die Erfassung der Strömungsrichtung mit einer gewissen massenbedingten Trägheit. Zudem kann es zu Oszillationsbewegungen je nach Dämpfung der Drehbewegung der Windfahne kommen. Auch solche Nachteile können mit der erfindungsgemäßen Anströmungssensoreinrichtung überwunden werden.

Der Trägerkörper kann z.B. Teil eines Luftfahrzeuges sein, z.B. ein bestimmter Bereich des Profils eines Tragflügels, eines Leitwerkes oder das Rotorblatt eines Hubschraubers oder einer Windkraftanlage sein. Es kann auch ein separater Trägerkörper vorgesehen sein, um die Anströmsensoreinrichtung als separates Bauteil zu realisieren.

Die Mehrzahl der Drucksensoreinrichtungen erlaubt die Bestimmung einer Druckverteilung um die Anströmrichtungssensoreinrichtung in Richtung des Umströmungsverlaufs herum. Der Trägerkörper kann dabei entlang des vorgesehenen Umströmungsverlaufs vollständig oder nur teilweise mit den Drucksensoreinrichtungen belegt sein, z.B. an einer in Strömungsrichtung liegenden Seite. Eine vollständige Belegung ermöglicht eine Erkennung beliebiger Anströmrichtungen, d. h. aus sämtlichen, die Anströmrichtungssensoreinrichtung umgebenden Richtungen. Je nach Anwendungsfall kann auch eine teilweise Belegung mit den Drucksensoreinrichtungen sinnvoll sein. Beispielsweise für Anwendungen in der Luftfahrt, in der mit der Anströmrichtungssensoreinrichtung der Anstellwinkel eines Flugzeugs erfasst werden soll, reicht in der Regel ein Erfassungsbereich von +/- 30° aus, so dass auch eine Belegung des Trägerkörpers über einen Winkelbereich von 60° oder 70° (+/- 30° oder +/- 35° gegenüber der Flugrichtung) ausreichend ist. Bei bestimmten Flugzeugen kann auch eine Belegung um 180° vorteilhaft sein, z. B. bei militärischen Flugzeugen.

Die nachfolgend erläuterten vorteilhaften Weiterbildungen der Drucksensoreinrichtung können für eine, mehrere oder alle Drucksensoreinrichtungen der Anströmsensoreinrichtung realisiert werden.

Das Sensorelement der Drucksensoreinrichtung kann z.B. als Kraftsensorelement ausgebildet sein. Vorteilhafterweise ist ein Druckübersetzungselement vorgesehen, mit dem eine Druckübersetzung von der Erfassungsfläche zu dem Sensorelement hin durchgeführt werden kann. Mit dem Begriff "Druckübersetzung" ist gemeint, dass durch entsprechende Ausgestaltung des Druckübersetzungselementes z.B. relativ kleine, zu erfassende Druckwerte des strömenden Mediums auf rein mechanischem Wege übersetzt werden können in relativ hohe Kraftwerte, die auf das Sensorelement einwirken, so dass auch zur Messung sehr kleiner Drücke oder Druckunterschiede Sensorelemente verwendet werden können, die aufgrund ihrer Auslegung an sich nicht geeignet sind für die Erfassung der sehr kleinen Druckwerte. Im umgekehrten Fall kann über das Druckübersetzungselement auch eine Druckübersetzung von sehr hohen Druckwerten des strömenden Mediums, insbesondere im Fall hoher Hydraulikdrücke, auf relativ kleine Kraftwerte, die auf das Sensorelement einwirken, durchgeführt werden. Hierdurch können auch relativ empfindliche Sensorelemente auf einfache und kostengünstige Weise zur Erfassung sehr hoher Druckwerte verwendet werden. Insgesamt erlaubt die Erfindung damit auf einfache und kostengünstige Weise die Verwendung praktisch beliebiger Sensorelemente zur Messung praktisch beliebiger Drücke. Dies hat den Vorteil, dass für die jeweilige Messaufgabe jeweils die z.B. preisgünstigsten oder am einfachsten in die Anströmrichtungssensoreinrichtung zu integrierenden Sensorelemente, die handelsüblich verfügbar sind, verwendet werden können. Eine Anpassung an die jeweilige Messaufgabe kann dann durch entsprechende Auslegung des Druckübersetzungselementes erfolgen. So ist bei einer Druckübersetzung von großen Drücken des strömenden Mediums auf kleine auf das Sensorelement einwirkende Kräfte die Erfassungsfläche größer zu dimensionieren als die Kraftabgabefläche. Im umgekehrten Fall, in dem geringe Drücke des strömenden Mediums durch das Druckübersetzungselement verstärkt werden sollen, ist die Kraftabgabefläche kleiner als die Erfassungsfläche zu dimensionieren, d.h. die Oberfläche der Kraftabgabefläche ist dann kleiner als die Oberfläche der Erfassungsfläche.

Wenn eine Anströmrichtungssensoreinrichtung ohne das beschriebene, mechanische Druckübersetzungselement realisiert wird, ist immer eine feste Beziehung zwischen den ermittelten Kraftwerten des Sensorelements und den auftretenden Druckwerten des strömenden Mediums vorgegeben, die durch die Größe der Sensierfläche des Sensorelementes festgelegt ist. Allgemein angegeben lautet die Beziehung wie folgt:

$$F = A \times p$$

Hierbei gibt F die vom Sensorelement erfasste Kraft an, p ist der anstehende Druck des strömenden Mediums und A die Sensierfläche des Sensorelements, auf die der Druck des strömenden Mediums einwirkt. Durch das Druckübersetzungselement kann diese feste 1-zu-1-Beziehung zwischen dem Druck und der Kraft überwunden werden und je nach Ausgestaltung des Druckübersetzungselements variabel angepasst werden. Durch das Druckübersetzungselement ergibt sich in allgemeiner Form dann die Beziehung:

$$F = Ü \times A \times p$$

Hierbei stellt Ü einen Übersetzungsfaktor des Druckübersetzungselements dar. Vorteilhaft ist dabei Ü ≠ 1 gewählt. Soll eine Übersetzung von großen Druckwerten in kleine Kraftwerte erfolgen, wird Ü < 1 gewählt. Soll eine Übersetzung von kleinen Druckwerten in große Kraftwerte erfolgen, wird Ü > 1 gewählt. Die Größe Ü bestimmt sich dabei als Erfassungsfläche des Druckübersetzungselements dividiert durch Kraftabgabefläche des Druckübersetzungselements. Es ist vorteilhaft, die Kraftabgabefläche in etwa gleich groß zu dimensionieren wie die Sensierfläche A des Sensorelements. In diesem Fall entspricht der Übersetzungsfaktor Ü zugleich der Erfassungsfläche des Druckübersetzungselements dividiert durch die Sensierfläche A.

Gemäß einer vorteilhaften Weiterbildung der Erfindung ist die Querschnittsfläche des Sensorelementes kleiner als die Erfassungsfläche, d.h. deren Oberfläche. Dies erlaubt die Verwendung kleiner kostengünstiger Sensorelemente für Druckerfassungsaufgaben mit relativ kleinen Druckwerten. Insbesondere bei Verwendung der erfindungsgemäßen Anströmrichtungssensoreinrichtung zur Erfassung der Anströmrichtung von Luft in der Atmosphäre, z.B. bei Flugzeugen, Kraftfahrzeugen oder bei Windkraftanlagen, kann hierdurch eine besonders kompakte und kostengünstige Anströmungssensoreinrichtung realisiert werden.

Gemäß einer vorteilhaften Weiterbildung der Erfindung ist das Sensorelement als piezoelektrischer oder piezoresistiver Sensor ausgebildet. Dies hat den Vorteil, dass das Sensorelement relativ klein ist und zudem kostengünstig realisiert werden kann. Zudem lässt sich ein sehr kompakter Aufbau der Anströmrichtungssensoreinrichtung realisieren.

Gemäß einer vorteilhaften Weiterbildung der Erfindung ist das Sensorelement als piezoresistiver Dünnschichtsensor ausgebildet. Das hat den Vorteil, dass solche Sensorelemente robust und wenig beschädigungsempfindlich sind und zudem sehr flach bauend sind, so dass sie ohne Weiteres an der Außenfläche des Trägerkörpers angeordnet werden können, ohne die Strömung spürbar zu beeinflussen. Piezoresistive Dünnschichtsensoren sind zudem hochsensitiv gegenüber auf sie einwirkenden Kräften bzw. Drücken. Ein weiterer Vorteil besteht darin, dass piezoresistive Dünnschichtsensoren sehr kostengünstig herstellbar sind.

Gemäß einer vorteilhaften Weiterbildung der Erfindung weist das Sensorelement eine Sensorschicht aus einem piezoresistiven Material auf, das mit dotiertem oder undotiertem Kohlenwasserstoff oder reinem Kohlenstoff hergestellt ist. Das piezoresistive Material kann insbesondere DLC (Diamond Like Carbon) sein. Auf die Sensorschicht ist wenigstens eine Elektrode aufgebracht. Gemäß einer vorteilhaften Weiterbildung kann auf die Sensorschicht bzw. die Elektrode noch eine Verschleißschutzschicht aufgebracht sein.

Die Sensorschicht kann z.B. direkt auf dem Trägerkörper aufgebracht sein, z.B. durch Beschichtung der Außenfläche des Trägerkörpers mit der Sensorschicht.

Gemäß einer vorteilhaften Weiterbildung der Erfindung ist das Druckübersetzungselement mit einer Vorspannkraft gegenüber dem Sensorelement vorgespannt. Dies hat den Vorteil, dass das Sensorelement auch bereits dann mit einer gewissen Kraft beaufschlagt ist, wenn der Druck des strömenden Mediums gleich null ist. Hierdurch kann über das Sensorelement auch eine Druckverringerung zu negativen Drücken hin, d.h. Drücke unterhalb des Atmosphärendrucks, erfasst werden. Zur Erzeugung der Vorspannkraft kann z.B. eine oder mehrere rückseitig hinter der Erfassungsfläche angeordnete Zugfedern verwendet werden.

Gemäß einer vorteilhaften Weiterbildung der Erfindung weist die Drucksensoreinrichtung mehrere Sensorelemente und mehrere Druckübersetzungselemente auf, wobei eines, mehrere oder alle Druckübersetzungselemente wenigstens zwei Kraftabgabeflächen aufweisen, und wobei jeweils wenigstens zwei Kraftabgabeflächen unterschiedlicher Druckübersetzungselemente kraftübertragend mit jeweils einem Sensorelement gekoppelt sind. Die genannten Druckübersetzungselemente können z.B. als formfeste, im Wesentlichen starre Membrane ausgebildet sein. Über in den Endbereichen der Druckübersetzungselemente angeordnete Kraftabgabeflächen können die Kräfte auf jeweilige Sensorelemente übertragen werden. Hiermit lassen sich besonders vielfältige Formgebungen von Trägerkörpern mit den entsprechenden Druckübersetzungselementen bestücken. So kann z.B. der Nasenbereich eines Flugzeugtragflügels, eines Leitwerkes oder eines Rotorblattes, der dann den Trägerkörper der Anströmrichtungssensoreinrichtung bildet, in vorteilhafter Weise mit den genannten Druckübersetzungselementen und Sensorelementen bestück werden.

Gemäß einer vorteilhaften Weiterbildung der Erfindung weist die Anströmrichtungssensoreinrichtung eine geschlossene ringartige Struktur auf, die umlaufend mit Sensorelementen und Druckübersetzungselementen bestückt ist. Die Druckübersetzungselemente können hierbei auch miteinander verbunden ausgebildet sein oder einteilig ausgebildet sein und damit ebenfalls eine geschlossene ringartige Struktur um den Trägerkörper der Anströmrichtungssensoreinrichtung bilden.

Gemäß einer vorteilhaften Weiterbildung der Erfindung weist die Oberfläche der Kraftabgabefläche eine Noppenform, eine Spitzenform oder eine Konusform auf oder eine in sonstiger Art zum Sensorelement hin sich verjüngende Form. Dies hat den Vorteil, dass auch bei geringfügiger Verkippung des Druckübersetzungselementes gegenüber dem Sensorelement eine sichere, kontinuierliche Kraftübertragung auf das Sensorelement ermöglicht wird, ohne dass es infolge der Verkippung zu ungewollten Schwankungen der Sensorddaten kommt.

Gemäß einer vorteilhaften Weiterbildung der Erfindung weist das Sensorelement eine Vielzahl von diskreten, separat elektrisch kontaktierten drucksensitiven Flächenbereichen auf, wobei die Kraftabgabefläche eines Druckübersetzungselements mit einer oder mehreren drucksensitiven Flächenbereichen kraftübertragend gekoppelt ist und in angrenzenden umgebenden Flächenabschnitten dieser drucksensitiven Flächenbereiche weitere drucksensitive Flächenbereiche angeordnet sind. Dies hat den Vorteil, dass keine besonders präzise Ausrichtung der Kraftabgabefläche bezüglich der Sensorfläche erforderlich ist. Vielmehr wird auch bei entsprechenden Fertigungstoleranzen oder leichten Verformungen der Anströmrichtungssensoreinrichtung eine sichere Signalerfassung gewährleistet, da eine Vielzahl von benachbart liegenden drucksensitiven Flächenbereichen vorhanden ist und somit davon ausgegangen werden kann, dass die Kraftabgabefläche des Druckübersetzungselementes immer zumindest auf einen drucksensitiven Flächenbereich die Kraft überträgt. Hierbei ist es vorteilhaft, wenn die Signale sämtlicher drucksensitiven Flächenbereiche gemeinsam ausgewertet werden, z.B. indem sämtliche Signale miteinander addiert werden. In diesem Fall wird automatisch die vollständige von dem Druckübersetzungselement über die Kraftabgabefläche übertragene Kraft erfasst. Insgesamt trägt diese Weiterbildung dazu bei, dass die Anströmrichtungssensoreinrichtung kostengünstig hergestellt werden kann, da keine allzu engen Toleranzen gefordert müssen und auch das Temperaturverhalten unkritisch ist. Sofern das Sensorelement als piezoresistiver Dünnschichtsensor mit einer Sensorschicht ausgebildet ist, auf die wenigstens eine Elektrode aufgebracht ist, können die drucksensitiven Flächenbereiche durch jeweilige Elektroden sowie die unter den Elektroden liegenden Bereiche der Sensorschicht gebildet werden.

Gemäß einer vorteilhaften Weiterbildung der Erfindung sind die Sensorelemente in wenigstens zwei Reihen angeordnet, die jeweils entlang des vorgesehenen Umströmungsverlaufs der Anströmrichtungssensoreinrichtung zueinander versetzt sind. Hierdurch kann bei gegebener Längenausdehnung der Sensorelemente in Umströmungsrichtung die Messauflösung erhöht werden. So kann beispielsweise bei zwei Reihen von Sensorelementen jeweils ein Sensorelement auf Höhe eines Spaltes zwischen zwei Sensorelementen einer benachbarten Reihe von Sensorelementen angeordnet sein. Durch weitere Reihen von Sensorelementen kann die Messauflösung weiter gesteigert werden. Grundsätzlich kann die Anströmrichtungssensoreinrichtung auch mit nur einer Reihe von Sensorelementen realisiert sein. Durch mehrere Reihen mit gegeneinander versetzten Sensorelementen kann jedoch die Auflösung erhöht werden.

Als Trägerkörper kann grundsätzlich jeder beliebige dreidimensionale Körper verwendet werden. Gemäß einer vorteilhaften Weiterbildung der Erfindung werden als Trägerkörper Bauteile eines Gegenstands, für den die Anströmrichtung des strömenden Mediums erfasst werden kann, verwendet. Bei Verwendung in der Luftfahrt kann z. B. der Nasenbereich einer Tragfläche als Strömungskörper verwendet werden. Insbesondere bei Verwendung von Sensorelementen in piezoresistiver Dünnschicht-Technologie können die Sensorelemente direkt auf die Tragfläche aufgebracht werden.

Der Trägerkörper kann auch als zusätzliches Bauteil ausgebildet sein. Vorteilhaft sind insbesondere Formgebungen des Trägerkörpers, die einen günstigen Strömungsverlauf des strömenden Mediums ermöglichen, z. B. Strömungskörper mit einem kreisrunden Querschnitt, einem ovalen bzw. elliptischen Querschnitt oder sonstigem Querschnitt oder mit einem typischen Stromlinienquerschnitt. Bei Verwendung eines kreisrunden Querschnitts ist es vorteilhaft, den Trägerkörper in Form eines Zylinders auszubilden, der von der Seite, d.h. auf seine zylindrische Wandfläche, angeströmt wird.

Vorteilhaft sind auch Formgebungen des Trägerkörpers, die eine Erfassung der Anströmrichtung aus unterschiedlichen bzw. beliebigen räumlichen Ebenen erlauben. Der Trägerkörper kann z.B. kugelförmig sein und an der Außenoberfläche  umlaufend mit z.B. sechseck-förmigen Sensorelementen belegt sein, die z.B. nach Art eines Wabenmusters angeordnet sind. Hierdurch können gleichzeitig zwei verschiedene Komponenten der Anströmrichtung gemessen werden, z.B. in zwei Koordinatenrichtungen (z.B. x- und y-Richtung). Bei Anwendung der Anströmrichtungssensoreinrichtung in einem Flugzeug kann z.B. gleichzeitig der Anstellwinkel sowie der Schiebewinkel des Flugzeuges bestimmt werden.

Gemäß einer vorteilhaften Weiterbildung der Erfindung sind die Sensorelemente durch elektrische Verbindungsleitungen, die durch einen Dichtungsbereich der Anströmrichtungssensoreinrichtung geführt sind, mit in einem Kontaktbereich der Anströmrichtungssensoreinrichtung angeordneten elektrischen Kontaktstellen der Anströmrichtungssensoreinrichtung verbunden. Der Kontaktbereich ist dazu eingerichtet, nicht mit dem strömenden Medium in Kontakt zu kommen. Dies hat den Vorteil, dass die Anströmrichtungssensoreinrichtung in unterschiedlichen Anwendungsbereichen leicht montierbar ist. Durch den Dichtungsbereich, der einen gewissen Abstand zwischen einem Kontaktbereich und dem Trägerkörper erlaubt, kann die Anströmrichtungssensoreinrichtung beispielsweise in die Rumpfwand eines Luftfahrzeugs oder in den Rumpfboden eines Schiffs eingebaut werden. Vorteilhaft kommt dabei der Kontaktbereich nicht mit dem strömenden Medium in Kontakt, so dass dieser geschützt angeordnet werden kann. Hierdurch kann der Kontaktbereich vor den im Außenbereich vorherrschenden Umgebungsbedingungen geschützt werden. Hierdurch eignet sich die Anströmrichtungssensoreinrichtung auch für strömende Medien, die für die elektrischen Kontaktstellen schädlich wären. Der Dichtungsbereich kann auch zugleich dafür verwendet werden, eine entsprechende Abdichtung des Kontaktbereichs gegenüber dem mit dem strömenden Medium in Kontakt kommenden Teil der Anströmrichtungssensoreinrichtung zu realisieren, z. B. durch eine Elastomer-Dichtung. Durch den durch den Dichtungsbereich ermöglichten Abstand des dem mit dem strömenden Medium in Kontakt kommenden Teils der Anströmrichtungssensoreinrichtung von dem Kontaktbereich kann die Anströmungssensoreinrichtung leichter derart montiert werden, dass der Strömungskörper möglichst unbeeinflusst von den Montagemitteln für die dem mit dem strömenden Medium in Kontakt kommenden Teil der Anströmrichtungssensoreinrichtung von dem strömenden Medium umströmt wird. Zudem kann sichergestellt werden, dass der Strömungskörper außerhalb der einen Flugkörper umgebenden Grenzschicht liegt. Dies wirkt sich positiv auf die Messgenauigkeit der Anströmungssensoreinrichtung aus.

Gemäß einer vorteilhaften Weiterbildung der Erfindung weist die Anströmrichtungssensoreinrichtung ein oder mehrere Heizelemente in dem Trägerkörper auf, über das bzw. über die eine gewünschte Arbeitstemperatur der Anströmrichtungssensoreinrichtung einstellbar ist. Dies hat den Vorteil, dass durch das vorbeiströmende Medium auftretende, ggf. lokal unterschiedlich wirkende Kühlungseffekte kompensiert werden können. Hierdurch kann die Anströmrichtungssensoreinrichtung unabhängig von temperaturabhängigen Charakteristika der Sensorelemente mit gleich bleibender Messgenauigkeit betrieben werden. Sofern mehrere Heizelemente vorgesehen sind, können diese gemeinsam geregelt werden. Vorteilhaft ist auch eine individuelle Steuerung oder Regelung der Heizelemente, derart, dass bei ungleichmäßiger Temperaturverteilung in der Anströmrichtungssensoreinrichtung eine Vergleichmäßigung durch entsprechende, individuelle Steuerung oder Regelung der Heizelemente herbeigeführt wird. Zudem kann durch die Heizelemente eine Eisbildung vermieden werden.

Die Heizelemente können beispielsweise in Form von Heizspiralen oder Heizpatronen realisiert sein.

Gemäß einer vorteilhaften Weiterbildung der Erfindung ist das Heizelement bzw. sind die Heizelemente mit einem Temperaturregler verbunden, der dazu eingerichtet ist, die Arbeitstemperatur der Anströmungssensoreinrichtung konstant zu halten.

Gemäß einer vorteilhaften Weiterbildung der Erfindung ist das Heizelement bzw. die Heizelemente mit einem Temperaturregler verbunden sind, der dazu eingerichtet ist, die Arbeitstemperatur der Anströmrichtungssensoreinrichtung so hoch zu halten, dass sich im von dem strömenden Medium umströmten Bereich der Anströmrichtungssensoreinrichtung kein Eis bilden kann. Hierdurch kann unter den jeweiligen Einsatzbedingungen der Anströmungssensoreinrichtung eine insbesondere im Bereich der Luftfahrt gefährliche Eisbildung vermieden werden.

Gemäß einer vorteilhaften Weiterbildung der Erfindung ist wenigstens ein Temperatursensor in oder an dem Trägerkörper vorgesehen. Gemäß einer vorteilhaften Weiterbildung der Erfindung ist pro Heizelement ein Temperatursensor vorgesehen, der in der Nähe des Heizelementes angeordnet ist. Gemäß einer vorteilhaften Weiterbildung der Erfindung sind die Temperatursensoren nahe bei den Sensorelementen angeordnet.

Ein weiterer Vorteil ist, dass durch Messung von Temperaturwerten durch die Temperatursensoren eine automatische Temperaturkompensation der durch die Sensorelemente erzeugten Sensordaten durchgeführt werden kann.

Bei Verwendung der Anströmrichtungssensoreinrichtung an einem Luftfahrzeug kann vorteilhaft vorgesehen sein, dass die Solltemperatur der Temperaturregelung an die Flugsituation und/oder an die Umgebungsbedingungen angepasst ist.

Gemäß einer vorteilhaften Weiterbildung der Erfindung ist die Anströmrichtungssensoreinrichtung als Anstellwinkelmessgerät für ein Luftfahrzeug ausgebildet. Die Anströmrichtungssensoreinrichtung verfügt über eine genormte Schnittstelle, z. B. ARINC, die mit dem Bordrechner eines Luftfahrzeugs verbindbar ist. Über die Schnittstelle ist die aktuelle Anströmrichtung als Maß für den Anstellwinkel übertragbar. Hierdurch kann die aktuelle Anströmrichtung direkt an den Bordrechner des Luftfahrzeugs übermittelt werden.

Gemäß einer vorteilhaften Weiterbildung der Erfindung ist die Anströmrichtungssensoreinrichtung als Schiebewinkelmessgerät für ein Luftfahrzeug ausgebildet. Die Anströmrichtungssensoreinrichtung verfügt über eine genormte Schnittstelle, z. B. ARINC, die mit dem Bordrechner eines Luftfahrzeugs verbindbar ist. Über die Schnittstelle ist die aktuelle Anströmrichtung als Maß für den Schiebewinkel übertragbar. Hierdurch kann die aktuelle Anströmrichtung direkt an den Bordrechner des Luftfahrzeugs übermittelt werden.

Vorteilhaft kann die Anströmrichtungssensoreinrichtung auch als kombiniertes Anstellwinkel/Schiebewinkelmessgerät ausgebildet sein. In diesem Fall werden zwei Komponenten der Anströmrichtung von der Anströmrichtungssensoreinrichtung erfasst, und zwar die Anströmrichtung bezüglich der Querachse des Luftfahrzeugs (entsprechend dem Anstellwinkel) und die Anströmrichtung bezüglich der Hochachse des Luftfahrzeugs (entsprechend dem Schiebewinkel). Hierbei werden dann die zwei erfassten Komponenten der Anströmrichtung direkt an den Bordrechner des Luftfahrzeugs übermittelt.

Die eingangs genannte Aufgabe wird ferner gelöst durch eine Anströmrichtungserfassungseinrichtung mit wenigstens einer Anströmrichtungssensoreinrichtung der zuvor erläuterten Art und wenigstens einer Auswerteeinrichtung, die mit der Anströmrichtungssensoreinrichtung verbunden ist, wobei die Auswerteeinrichtung dazu eingerichtet ist, Sensordaten von der Anströmrichtungssensoreinrichtung zu empfangen und aus den Sensordaten einen Wert für die Anströmrichtung zu bestimmen, mit der ein strömendes Medium die Anströmrichtungssensoreinrichtung anströmt. Die Auswerteeinrichtung kann in Form einer Auswerteelektronik baulich in die Anströmrichtungssensoreinrichtung integriert sein oder als separate Auswerteelektronik ausgebildet sein. Vorteilhaft kann die Auswerteeinrichtung auch die Elemente des Temperaturreglers beinhalten, der zur Steuerung der Heizelemente vorgesehen ist.

Gemäß einer vorteilhaften Weiterbildung der Erfindung ist die Auswerteeinrichtung dazu eingerichtet, aus den von den Sensorelementen erzeugten Sensordaten die Position von einem oder beiden Druckmaxima an der Außenfläche der Anströmrichtungssensoreinrichtung zu bestimmen und als Wert für die Anströmrichtung eine Gerade durch die Positionen der zwei höchsten Druckmaxima und/oder als Wert für die Anströmrichtung eine Gerade durch die Position von einem der zwei höchsten Druckmaxima und dem Mittelpunkt der Querschnittsfläche der Anströmrichtungssensoreinrichtung in einem Schnitt entlang des vorgesehenen Umströmungsverlaufs des Strömungskörpers zu bestimmen. Die Anströmrichtung lässt sich zudem aus der Lage von zwei Druckminima bestimmen. Die Verbindungslinie der beiden Druckminima verläuft durch den Mittelpunkt des Kreisquerschnitts und ist senkrecht zur Anströmrichtung. Hieraus wird als Wert für die Anströmrichtung eine Senkrechte zu einer Geraden durch die Positionen der zwei Druckminima bestimmt. Diese Senkrechte ist direkt ein Maß für die Anströmrichtung bei einer kreiszylindrischen Anströmrichtungssensoreinrichtung. Die Druckminima oder -maxima werden durch Vergleich der Sensordaten der verschiedenen Sensorelemente bestimmt, wobei ggf. die Genauigkeit durch Interpolation zwischen Sensordaten zweier benachbarter Sensorelemente erhöht werden kann. Bei einem Kreiszylinder liegen die jeweiligen Druckminima oder -maxima normalerweise auf einander gegenüber liegenden Seiten des Zylinders. Die Bestimmung des Werts der Anströmrichtung kann daher auch durch Bestimmung von einem der zwei Druckminima oder -maxima erfolgen. Die Verbindungslinie vom Mittelpunkt des kreisförmigen Querschnitts der Anströmrichtungssensoreinrichtung zum Druckmaximum weist in Richtung der Anströmung.

Vorteilhafte Anwendungsgebiete der Anströmrichtungssensoreinrichtung liegen im Bereich der Luftfahrt, z. B. als Anstellwinkelsensor, oder in der Meteorologie als Ersatz für klassische Windfahnen. Ein weiterer Anwendungsbereich liegt auf dem Gebiet von Windkraftanlagen. Durch Anordnung von Anströmrichtungssensoreinrichtung an den Blättern und Blattspitzen einer Windkraftanlage kann das Strömungsfeld, in dem die Windkraftanlage operiert, vermessen werden. Hierdurch kann der Anstellwinkel der Blätter in Abhängigkeit der Anströmung optimiert werden, sodass der Wirkungsgrad der Windkraftanlage gesteigert werden kann.

Ein weiteres Anwendungsgebiet der Anströmrichtungssensoreinrichtung liegt darin, einen Schiebewinkel eines Luftfahrzeugs oder eines Schiffs zu messen.

Ein weiteres Einsatzgebiet der Anströmrichtungssensoreinrichtung besteht darin, die Luftfeuchte zu messen. Hierzu sind zusätzliche Informationen über den Luftdruck, die Anströmgeschwindigkeit des strömenden Mediums sowie die Umgebungstemperatur erforderlich. Aus diesen Informationen und der elektrischen Leistung, die den Heizelementen zur Konstanthaltung der Arbeitstemperatur der Anströmrichtungssensoreinrichtung zugeführt werden muss, kann die Luftfeuchte bestimmt werden.

Die Erfindung wird nachfolgend anhand von Ausführungsbeispielen unter Verwendung von Zeichnungen näher erläutert.

Es zeigen:

Figur 1                  - ein Flugzeug in Seitenansicht und

Figur 2                  - eine Anströmrichtungssensoreinrichtung in perspektivischer Darstellung und

Figur 3                  - eine Ansicht der Anströmrichtungssensoreinrichtung gemäß Figur 2 in Schnittdarstellung und

Figur 4                  - eine Anströmrichtungssensoreinrichtung in perspektivischer Darstellung in einer ersten Ansicht und

Figur 5                  - eine Drucksensoreinrichtung der Anströmrichtungssensoreinrichtung in seitlicher teilweise geschnittener Ansicht und

Figur 6                  - eine Anordnung mehrerer Drucksensoreinrichtungen gemäß Figur 5 und

Figur 7                  - eine Anordnung mehrerer Drucksensoreinrichtungen in einer weiteren Ausführungsform und

Figuren 8 bis 13         - weitere Ausführungsformen einer Anströmsensoreinrichtung und

Figuren 14 und 15        - weitere Ausführungsformen von Drucksensoreinrichtungen und

Figur 16                 - eine Anströmsensoreinrichtung mit Auswerteeinrichtung.

In den Figuren werden gleiche Bezugszeichen für einander entsprechende Elemente verwendet.

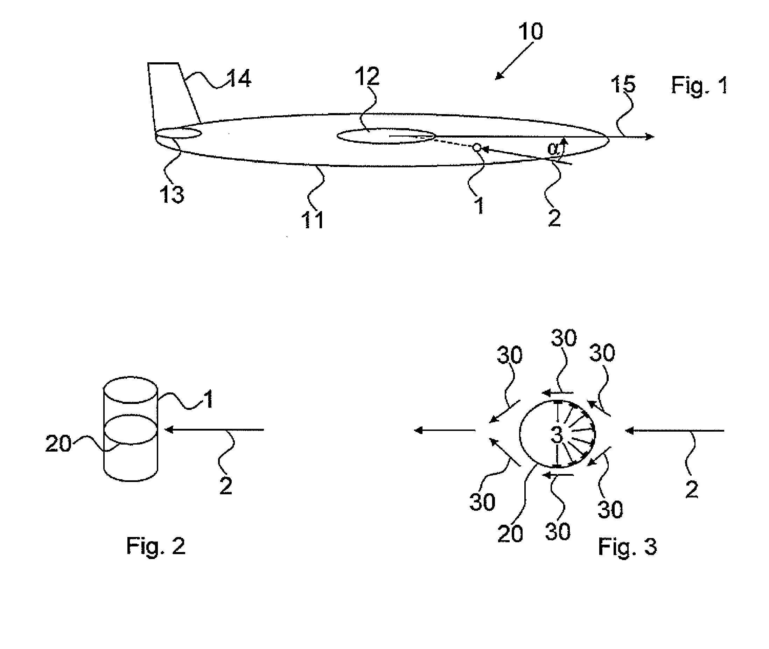

Die Figur 1 zeigt ein Luftfahrzeug 10, z.B. ein Flugzeug, mit einem Rumpf 11, einem Flügel 12, einem Höhenleitwerk 13 und einem Seitenleitwerk 14. Das Luftfahrzeug 10 bewegt sich in einer Flugrichtung 15. Am Rumpf 11 des Luftfahrzeugs 10 ist eine Anströmrichtungssensoreinrichtung 1 zur Messung der Anströmrichtung 2 der umgebenden Luft angebracht. Die Anströmrichtungssensoreinrichtung 1 ist durch die Rumpfwand geführt, so dass in der Figur 1 der außen angeordnete Teil erkennbar ist, der einen Strömungskörper bildet.

Der Strömungskörper wird von der umgebenden Luft in einer Anströmrichtung 2 angeströmt. Die Anströmrichtung 2 weist z. B. einen Winkel $\alpha$ zu der Flugrichtung 15 auf. Der Winkel $\alpha$ entspricht dabei dem Anstellwinkel.

Die Figur 2 zeigt beispielhaft eine zylindrische Anströmrichtungssensoreinrichtung 1, die von einem strömenden Medium in einer Anströmrichtung 2 angeströmt wird. In der Figur 2 ist eine Ebene 20, d. h. eine kreisrunde Querschnittsfläche der zylindrischen Anströmrichtungssensoreinrichtung 1, markiert, die in der Figur 3 in Draufsicht dargestellt ist. Anhand der Figur 3 ist außerdem vereinfacht dargestellt, in welcher Weise das strömende Medium die Anströmrichtungssensoreinrichtung 1 entlang der Querschnittsfläche 20 umströmt. Dargestellt ist durch mehrere Pfeile ein Umströmungsverlauf 30, der sich aus der durch die Anströmrichtung 2 ergebenden Strömung des Mediums ergibt. Ferner sind in Figur 3 beispielhaft Drucksensoreinrichtungen 3 dargestellt. Wie erkennbar ist, sind die Drucksensoreinrichtungen 3 entlang des Umströmungsverlaufs 30 hintereinander angeordnet, so dass die einzelnen Partikel des strömenden Mediums die Drucksensoreinrichtungen 3 zeitlich nacheinander passieren. Hierdurch entsteht ein bestimmter Druckverlauf in Umströmungsrichtung 30, der von den Drucksensoreinrichtungen 3 erfasst werden kann.

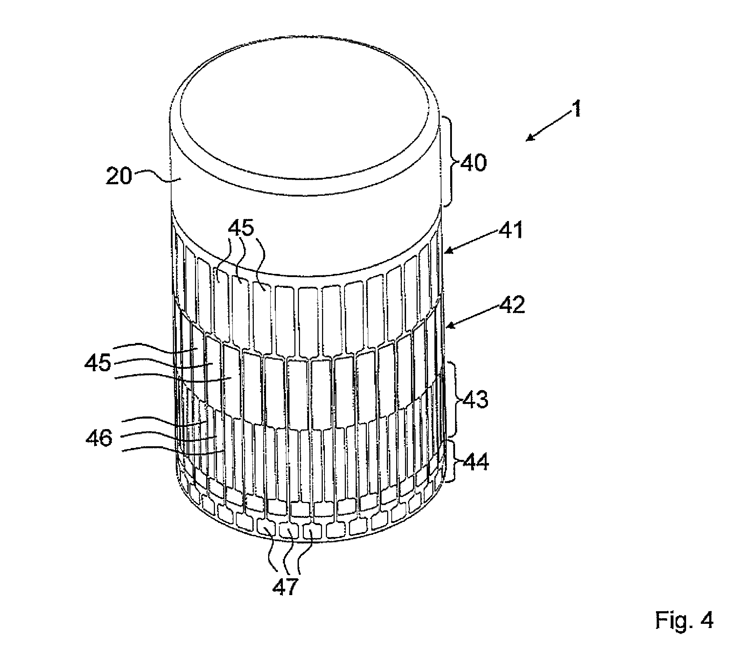

Die Figur 4 zeigt eine Anströmrichtungssensoreinrichtung 1, die im Wesentlichen kreiszylindrisch ist. Auf einem Trägerkörper 20 sind Sensorelemente in piezoresistiver Dünnschichtsensor-Technologie angeordnet, deren Aufbau nachfolgend anhand weiterer Zeichnungen noch erläutert wird. Der Str Trägerkörper 20 weist im in Figur 4 oben dargestellten Bereich einen Abschlussabschnitt 40 auf, der den Trägerkörper 20 an seinem einen Ende abschließt. An den Abschlussabschnitt 40 schließt sich eine erste Reihe von Sensorelementen an, von denen in der Figur 4 außen liegende Elektroden 45 dargestellt sind. An die erste Reihe der Sensorelemente schließt sich eine zweite Reihe 42 von Sensorelementen an, die in der Figur 4 wiederum durch Elektroden 45 dargestellt sind. An die zweite Reihe 42 der Sensorelemente schließt sich ein Dichtungsbereich 43 an. Durch den Dichtungsbereich 43 sind elektrische Verbindungsleitungen 46 von den Elektroden 45 zu weiter unten liegenden elektrischen Kontaktstellen 47 geführt. An den Dichtungsbereich 43 schließt sich ein Kontaktbereich 44 an, in dem die elektrischen Kontaktstellen 47 angeordnet sind. An die Kontaktstellen 47 wird eine in der Figur 4 nicht dargestellte Auswerteeinrichtung, z. B. in Form einer elektronischen Schaltung, angeschlossen.

Die Elektroden 45 sind als dünne Schichten aus einem elektrisch leitenden Material, z. B. Kupfer oder Silber, gebildet. Die Elektroden 45 können beispielsweise im Wesentlichen rechteckförmig ausgebildet sein. Auch andere Formen können vorteilhaft realisiert werden. Wie erkennbar ist, sind die Elektroden 45 der ersten Reihe 41 der Sensorelemente gegenüber den Elektroden 45 der zweiten Reihe 42 der Sensorelemente versetzt angeordnet. Hierdurch kann eine Verdoppelung der Auflösung der Anströmrichtungssensoreinrichtung erreicht werden.

Innerhalb des Trägerkörpers 20 können Heizelemente 50 vorgesehen sein, die über den Umfang des Trägerkörpers 20 verteilt angeordnet sind. Die Heizelemente 50 weisen elektrische Anschlüsse auf, die von der Unterseite des Trägerkörpers 20 hervorstehen.

Die Elektroden 45, die elektrischen Verbindungsleitungen 46 und die elektrischen Kontaktstellen 47 können in der Art von Leiterbahnen ausgebildet sein, wie sie bei elektrischen Leiterplatten verwendet werden.

Die Anströmrichtungssensoreinrichtung weist zudem Druckübersetzungselemente auf. Die Figur 4 zeigt die Anströmrichtungssensoreinrichtung zunächst ohne die Druckübersetzungselemente.

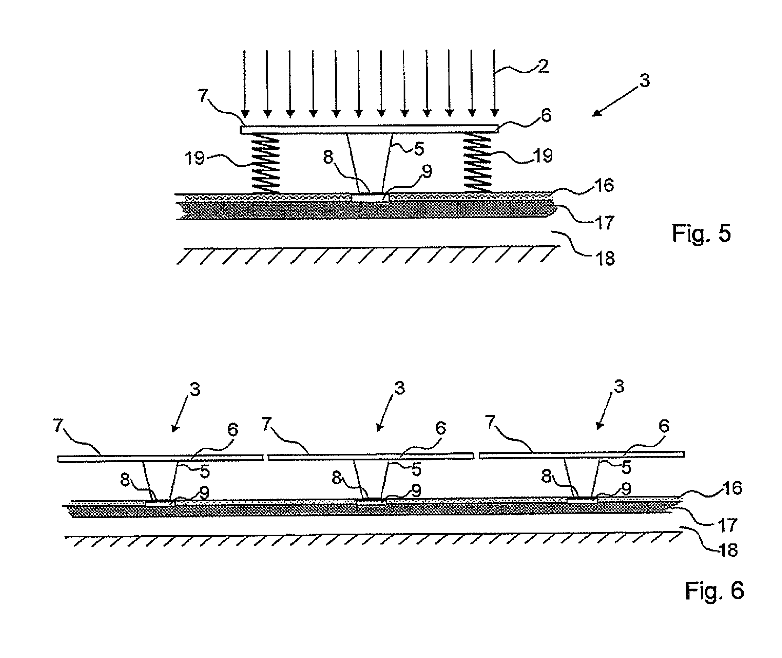

Die Figur 5 zeigt beispielhaft den Aufbau einer Drucksensoreinrichtung 3 der Anströmungssensoreinrichtung 1 in schematischer Darstellung in seitlicher Ansicht und teilweise geschnitten. Erkennbar ist die Anströmrichtung 2 des anströmenden Mediums, das auf eine Erfassungsfläche 7 eines Druckübersetzungselementes 5, 6, 7, 8 auftrifft. Das Druckübersetzungselement 5, 6, 7, 8 weist eine Anströmplatte 6 auf, die an einer Erfassungsseite die Erfassungsfläche 7 aufweist. Auf der der Erfassungsseite abgewandten Seite weist das Druckübersetzungselement 5, 6, 7, 8 ein Kraftübertragungselement 5 auf, der an einem von der Anströmplatte 6 entfernten Ende eine Kraftabgabefläche 8 aufweist. Das Kraftübertragungselement 5 kann, wie in der Figur 5 dargestellt, eine längliche, z.B. konische Form aufweisen. Das Kraftübertragungselement 5 kann auch wesentlich kürzer ausgebildet sein als dargestellt oder vollständig entfallen. In diesem Fall befindet sich die Kraftabgabefläche 8 direkt an der von der Erfassungsseite abgewandten Seite der Anströmplatte 6. Die Kraftabgabefläche 8 ist kraftübertragend mit der Erfassungsfläche 7 gekoppelt. Die übertragene Kraft wird auf ein unterhalb der Kraftabgabefläche 8 angeordnetes Sensorelement 9, 16, 17, 18 abgegeben. Das Sensorelement ist gemäß Figur 5 als piezoresistiver Dünnschichtsensor ausgebildet. Vorgesehen ist folgender Schichtaufbau. Auf einem Substrat 18, das z.B. direkt der Trägerkörper 20 oder eine elektrisch leitfähige Beschichtung des Trägerkörpers 20 sein kann, befindet sich eine Sensorschicht 17 aus piezoresistivem Material, z.B. DLC (Diamond Like Carbon). Die Sensorschicht 17 ist mit einer Verschleißschutzschicht 16 abgedeckt. Auf der Sensorschicht 17 befinden sich zusätzlich einzelne strukturierte Elektroden 9 aus einem elektrisch leitfähigem Material, z.B. Kupfer. Die Elektroden 9 können z.B.

die anhand der Figur 4 erläuterten Elektroden 45 sein. Die Elektroden 9 sind direkt auf die Sensorschicht 17 aufgebracht und ebenfalls, zumindest zum Teil, mit der Verschleißschutzschicht 16 abgedeckt. Das Substrat 18, auf dem die Sensorschicht 17 aufgebracht ist, besteht ebenfalls aus einem elektrisch leitfähigen Material. Durch Messung des ohmschen Widerstands zwischen der Elektrode 9 und dem Substrat 18 kann die auf die Sensorschicht 17 im Bereich der Elektrode 9 ausgeübte Kraft bestimmt werden.

In der Figur 5 ist außerdem dargestellt, dass das Druckübersetzungselement 5, 6, 7, 8 über Zugfedern 19, die zwischen der Anströmplatte 7 und dem Sensorelement 16, 17, 18 gespannt sind, eine Vorspannkraft erzeugt wird.

Die Figur 6 zeigt drei der zuvor beschriebenen Drucksensoreinrichtungen 3, die auf einem gemeinsamen Substrat 18 angeordnet sind und die gleiche, durchgehende Sensorschicht 17 nutzen. Durch Auswertung der Signale der verschiedenen Drucksensoreinrichtungen 3 ergeben sich unterschiedliche Kraftwerte, aus denen die Anströmrichtung 2 des Mediums ermittelt werden kann. Die Figur 6 zeigt die Drucksensoreinrichtungen 3 ohne die Zugfedern 19.

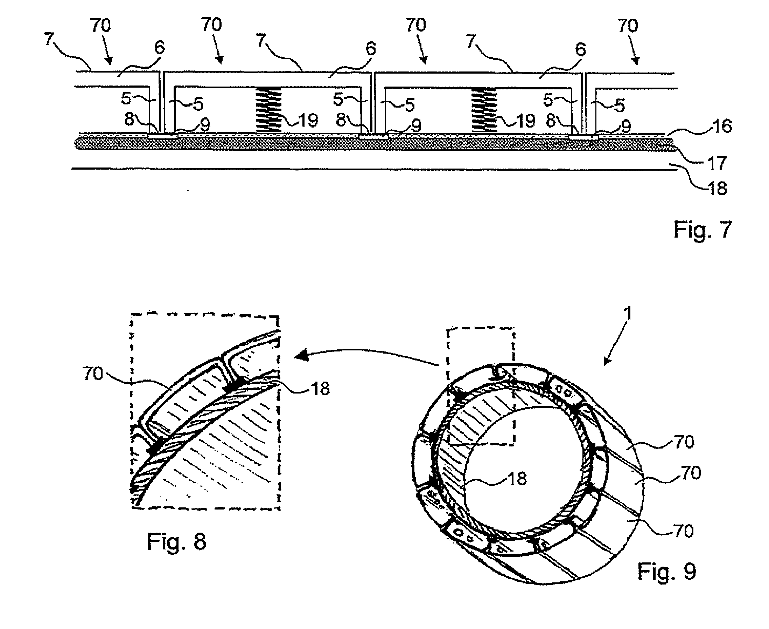

Die Figur 7 zeigt eine weitere Ausführungsform der Anströmrichtungssensoreinrichtung 1 mit Druckübersetzungselementen 70, die jeweils brückenartig zwischen zwei Elektroden 9 angeordnet sind. Die Druckübersetzungselemente 70 gemäß Figur 7 weisen jeweils in ihren Endbereichen links und rechts ein Kraftübertragungselement 5 auf. Zur Erzeugung einer Vorspannung ist etwa mittig zwischen der Anströmplatte 7 des Druckübersetzungselementes 70 und dem Sensorelement 9, 16, 17, 18 eine Zugfeder 19 gespannt.

Die Figuren 5, 6 und 7 zeigen die Anströmrichtungssensoreinrichtung 1 in einer im Wesentlichen ebenen Darstellung. Mit dem gleichen Aufbau kann die Anströmrichtungssensoreinrichtung auch gewölbt oder gekrümmt ausgebildet sein, z.B. mit einem ein Tragflächenprofil oder einen runden Hohlkörper aufweisenden Substratschicht 18. Dies ist in den Figuren 8 und 9 beispielhaft dargestellt. Die Substratschicht 18 wird durch einen zylindrischen Hohlkörper, z.B. ein metallisches Rohr, gebildet. Auf dem Substrat 18 sind mehrere Druckübersetzungselemente 70 der anhand der Figur 7 beschriebenen Art angeordnet, z.B. vollständig umlaufend um den zylindrischen Substratkörper 18. Der Substratkörper 18 ist an seiner Außenseite gemäß Figur 7 mit der Sensorschicht 17, den Elektroden 9 und der Verschleißschutzschicht 16 beschichtet.

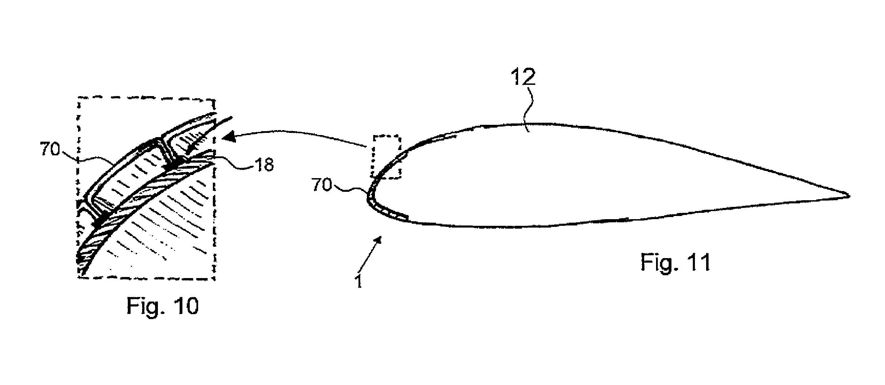

Die Figuren 10 und 11 zeigen eine Anwendung der anhand der Figur 7 erläuterten Anströmrichtungssensoreinrichtung bei direkter Anbringung an einer Tragfläche 12 eines Flugzeuges. Die Anströmrichtungssensoreinrichtung ist dabei im Nasenbereich der Tragfläche 12 angeordnet. Der Tragflächenkörper bildet dabei zugleich das Substrat 18. Der übrige Aufbau entspricht der Figur 7.

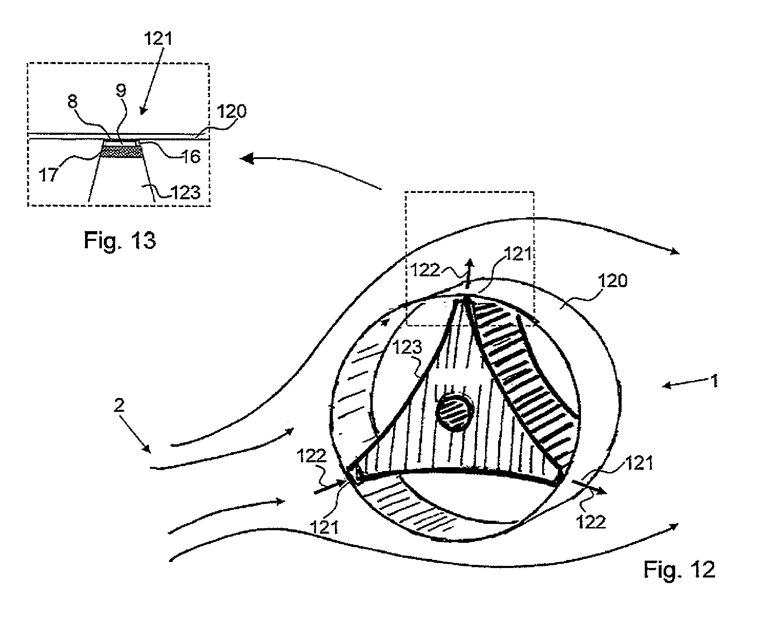

Die Figuren 12 und 13 zeigen eine weitere Ausführungsform der Anströmrichtungssensoreinrichtung 1. Vorgesehen ist ein zentraler Trägerkörper 123, der eine ungefähr dreieckige Querschnittsform mit abgeflachten Ecken des Dreiecks aufweist. Im Bereich der abgeflachten Ecken des Trägerkörpers 123 befindet sich der bereits erläuterte Schichtaufbau des Sensorelementes. Der Trägerkörper 123 ist umgeben von einem ringförmigen Druckübersetzungselement 120. Dargestellt ist eine Anströmrichtung 2 des Mediums von links unten. Pfeile 122 zeigen die an den jeweiligen abgeflachten Ecken des Trägerkörpers 123 wirksamen, vom Druckübersetzungselement 120 ausgeübten Kräfte. In der Figur 13 ist beispielhaft eine der abgeflachten Ecken des Trägerkörpers 123 vergrößert wiedergegeben. Wie erkennbar ist, wird der Trägerkörper 123 zugleich als Substrat verwendet. Auf dem Trägerkörper 23 ist die Sensorschicht 17 aus piezoresistivem Material aufgebracht. Darauf befindet sich eine Elektrode 9 und gegebenenfalls die Verschleißschutzschicht 16. Das Druckübersetzungselement 120 überträgt eine Kraft über eine Kraftabgabefläche 8 auf die Elektrode 9 und die darunter liegende Sensorschicht 17. Der Trägerkörper 123 ist, zumindest im Bereich der Beschichtung mit der Sensorschicht 17, elektrisch leitfähig ausgebildet. Zur Erfassung der einwirkenden Kraft wird der ohmsche Widerstand zwischen der Elektrode 9 und dem elektrisch leitfähigem Teil des Trägerkörpers 123 unterhalb der Sensorschicht 17 gemessen.

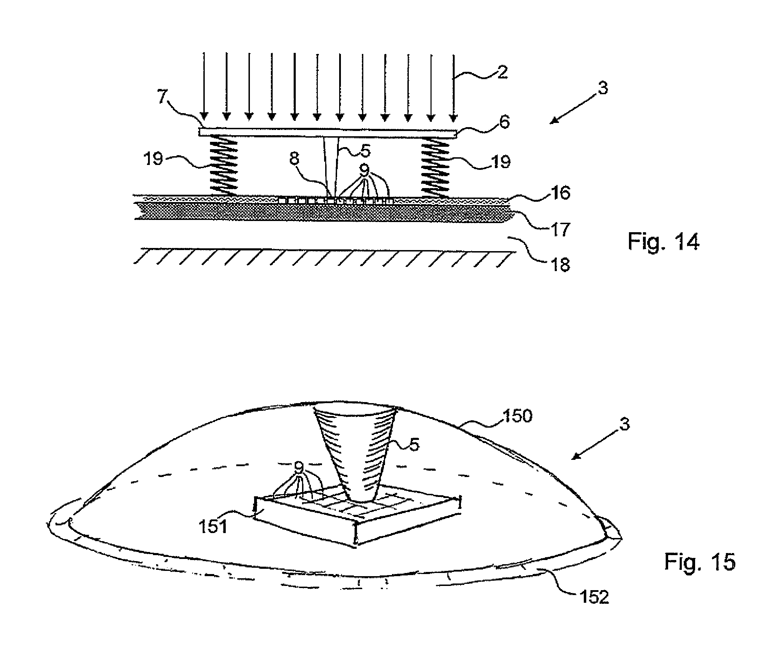

Die Figur 14 zeigt eine weitere Ausführungsform einer Drucksensoreinrichtung 3. Die Ausführungsform gemäß Figur 14 entspricht weitgehend der Ausführungsform gemäß Figur 5, mit dem Unterschied, dass das Kraftübertragungselement 5 schmaler ausgebildet ist, z.B. in der Art einer Spitze oder einer Nadel. Dementsprechend ist die Kraftabgabefläche 8 wesentlich kleiner. Die Kraftübertragung kann dann über eine Art Nadelspitze des Kraftübertragungselements 5 erfolgen. Um die Kraftabgabefläche 8 herum ist eine Vielzahl von Elektroden 9 angeordnet, die sich wiederum auf der Sensorschicht 17 befinden. Die Elektroden 9 können z.B. zweidimensional matrixartig nebeneinander angeordnet sein. Dies hat den Vorteil, dass die Kraftabgabefläche 8 auch bei leichter Dejustierung immer auf wenigstens eine Elektrode 9 trifft und somit eine sichere Krafterfassung möglich ist. Die Elektroden 9 sind in einer vorteilhaften Ausführungsform jeweils einzeln elektrisch mit einer Auswerteeinrichtung verbunden, so dass einzelne Sensordaten erfasst werden können.

Die Figur 15 zeigt eine Drucksensoreinrichtung 3, bei der ebenfalls eine Matrix von Elektroden 9 in einem Sensorabschnitt 151 angeordnet sind. Das Druckübersetzungselement weist in diesem Fall eine membranartige Hülle 150 auf, die mit dem Kraftübertragungselement 5 verbunden ist. Die Hülle 150 ist in einem äußeren Endbereich 152 mit dem Sensorelement 9, 16, 17, 18 verbunden.

Als Dotierungsmaterialien für die Sensorschicht 17 in Form einer dotierten Kohlenwasserstoffschicht kommen beispielsweise Metalle wie Wolfram, Chrom, Silber, Titan, Gold, Platin etc. in Frage. Als Material für die Sensorschicht 17 sind auch reine oder amorphe Kohlenstoffschichten möglich.

Die Elektroden 9, 45 bestehen aus einer dünnen Metallschicht, wie z. B. Chrom, Titan, Chrom-Nickel-Verbindungen etc.

Die Isolations- und Verschleißschutzschicht 16 kann z. B. aus einer Siliziumdotierten Kohlenwasserstoffschicht gebildet sein. Denkbar ist auch die Verwendung von Silizium-Sauerstoff-, Aluminiumoxid- oder Aluminiumnitritdotierten Kohlenwasserstoffschichten.

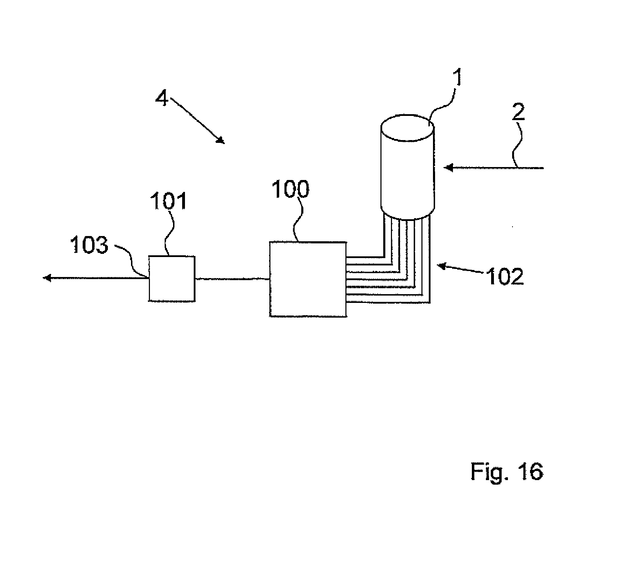

Die Figur 16 zeigt eine Anströmrichtungserfassungseinrichtung in schematischer Darstellung. Erkennbar sind eine Anströmrichtungssensoreinrichtung 1, eine Auswerteeinrichtung 100 sowie ein Schnittstellenmodul 101. Die Anströmrichtungssensoreinrichtung 1 ist über eine Mehrzahl elektrischer Leitungen 102 mit der Auswerteeinrichtung 100 verbunden. Über die elektrischen Leitungen 102 wird die elektrische Verbindung der Auswerteeinrichtung 100 mit den Elektroden 9, 45 der Drucksensoreinrichtungen 3 sowie mit den elektrischen Anschlüssen der Heizelemente hergestellt. Zudem werden über die elektrischen Leitungen 102 ggf. vorgesehene Temperatursensoren angeschlossen. Des Weiteren beinhalten die elektrischen Leitungen 102 eine Verbindungsleitung, mit der das Substrat 18 für die Dünnschichtsensoren mit der Auswerteschaltung 100 verbunden wird. Das Substrat 18 dient hierbei als gemeinsames Bezugspotential für alle Elektroden 9, 45.

Die Auswerteeinrichtung 100 weist z. B. einen ein Auswerteprogramm ausführenden Mikroprozessor auf. Die diversen Elektroden 9, 45 sind, ggf. über Multiplexer, mit einem oder mehreren Analog/Digitalwandler-Eingängen des Mikroprozessors verbunden. Zur Bestimmung der Sensordaten der Drucksensoreinrichtungen 3 misst die Auswerteeinrichtung 100 periodisch den ohmschen Widerstand zwischen den einzelnen Elektroden 9, 45 und dem Substrat 18. Die Sensordaten werden ausgewertet. Der hierdurch ermittelte Wert der Anströmrichtung 2 bzw. eines zugehörigen Anströmwinkels wird von der Auswerteeinrichtung 100 an ein an die Auswerteeinrichtung 100 angeschlossenes Schnittstellenmodul 101 übergeben. Das Schnittstellenmodul 101 konvertiert die Daten in ein von anderen Einrichtungen auswertbares, genormtes Format, z. B. ARINC. Die Schnittstelleneinrichtung 101 gibt die Daten dann an einer Ausgangsseite 103 aus.

## Patentansprüche

1. Anströmrichtungssensoreinrichtung (1) zur Messung einer Anströmrichtung (2), mit der ein strömendes Medium die Anströmrichtungssensoreinrichtung (1) anströmt, wobei die Anströmrichtungssensoreinrichtung (1) dazu eingerichtet ist, von dem strömenden Medium umströmt zu werden, mit wenigstens einem Trägerkörper (20, 123) und einer Vielzahl von Drucksensoreinrichtungen (3), die an der Außenfläche des Trägerkörpers (20, 123) angeordnet sind oder in dem Trägerkörper (20, 123) angeordnet und mit der Außenfläche des Trägerkörpers (20, 123) verbunden sind, wobei die Drucksensoreinrichtungen (3) entlang des vorgesehenen Umströmungsverlaufs (30) der Anströmrichtungssensoreinrichtung (1) hintereinander angeordnet sind, **dadurch gekennzeichnet, dass** eine, mehrere oder alle Drucksensoreinrichtungen (3) wie folgt ausgebildet sind:

   a) die Drucksensoreinrichtung (3) weist wenigstens ein Sensorelement (9, 16, 17, 18) auf, das dazu eingerichtet ist, eine in Abhängigkeit von einer auf das Sensorelement (9, 16, 17, 18) ausgeübten Kraft variable elektrische Kenngröße auszugeben,
   b) die Drucksensoreinrichtung (3) weist wenigstens ein Druckübersetzungselement (5, 6, 7, 8, 70, 120, 150) auf, das zwischen dem zu erfassenden Medium und dem Sensorelement (9, 16, 17, 18) angeordnet ist,
   c) das Druckübersetzungselement (5, 6, 7, 8, 70, 120, 150) weist eine für eine Druckbeaufschlagung durch das zu erfassende Medium eingerichtete Erfassungsfläche (7) auf, die an einer Erfassungsseite des Druckübersetzungselements (5, 6, 7, 8, 70, 120, 150) angeordnet ist,
   d) das Druckübersetzungselement (5, 6, 7, 8, 70, 120, 150) weist eine mit der Erfassungsfläche (7) kraftübertragend gekoppelte Kraftabgabefläche (8) auf, die an einer von der Erfassungsseite abgewandten Stelle des Druckübersetzungselements (5, 6, 7, 8, 70, 120, 150) angeordnet ist,
   e) die Kraftabgabefläche (8) ist mit dem Sensorelement (9, 16, 17, 18) kraftübertragend gekoppelt zur Übertragung einer von dem Medium auf die Erfassungsfläche ausgeübten Kraft auf das Sensorelement (9, 16, 17, 18).

2. Anströmrichtungssensoreinrichtung nach Anspruch 1, **dadurch gekennzeichnet, dass** die Kraftabgabefläche (8) kleiner ist als die Erfassungsfläche (7).

3. Anströmrichtungssensoreinrichtung nach einem der vorhergehenden Ansprüche, **dadurch gekennzeichnet, dass** das Sensorelement (9, 16, 17, 18) als piezoelektrischer oder piezoresistiver Sensor ausgebildet ist.

4. Anströmrichtungssensoreinrichtung nach einem der vorhergehenden Ansprüche, **dadurch gekennzeichnet, dass** das Sensorelement (9, 16, 17, 18) als piezoresistiver Dünnschichtsensor ausgebildet ist.

5. Anströmrichtungssensoreinrichtung nach Anspruch 4, **dadurch gekennzeichnet, dass** das Sensorelement (9, 16, 17, 18) eine Sensorschicht (17) aus einem piezoresistiven Material aufweist, das mit dotiertem oder undotiertem Kohlenwasserstoff oder reinem Kohlenstoff hergestellt ist, wobei auf die Sensorschicht (17) wenigstens eine Elektrode (9) aufgebracht ist.

6. Anströmrichtungssensoreinrichtung nach Anspruch 5, **dadurch gekennzeichnet, dass** auf die Sensorschicht (17) und/oder die Elektrode (9) wenigstens eine Verschleißschutzschicht (16) aufgebracht ist.

7. Anströmrichtungssensoreinrichtung nach einem der vorhergehenden Ansprüche, **dadurch gekennzeichnet, dass** das Druckübersetzungselement (5, 6, 7, 8, 70, 120, 150) mit einer Vorspannkraft gegenüber dem Sensorelement (9, 16, 17, 18) vorgespannt ist.

8. Anströmrichtungssensoreinrichtung nach einem der vorhergehenden Ansprüche, **dadurch gekennzeichnet, dass** die Anströmrichtungssensoreinrichtung (1) mehrere Sensorelemente (9, 16, 17, 18) und mehrere Druckübersetzungselemente (5, 6, 7, 8, 70, 120, 150) aufweist, wobei eines, mehrere oder alle Druckübersetzungselemente (5, 6, 7, 8, 70, 120, 150) wenigstens zwei Kraftabgabeflächen (8) aufweisen, und wobei jeweils wenigstens zwei Kraftabgabeflächen (8) unterschiedlicher Druckübersetzungselemente (5, 6, 7, 8, 70, 120, 150) kraftübertragend mit jeweils einem Sensorelement (9, 16, 17, 18) gekoppelt sind.

9. Anströmrichtungssensoreinrichtung nach Anspruch 8, **dadurch gekennzeichnet, dass** die Anströmrichtungssensoreinrichtung (1) eine geschlossene ringartige Struktur aufweist, die umlaufend mit Sensorelementen (9, 16, 17, 18) und Druckübersetzungselementen (5, 6, 7, 8, 70, 120, 150) bestückt ist.

10. Anströmrichtungssensoreinrichtung nach einem der vorhergehenden Ansprüche, **dadurch gekennzeichnet, dass** die Oberfläche der Kraftabgabefläche (8) eine Noppenform, eine Spitzenform oder eine Konusform oder eine in sonstiger Art zum Sensorelement (9, 16, 17, 18) hin sich verjüngende Form aufweist.

11. Anströmrichtungssensoreinrichtung nach einem der vorhergehenden Ansprüche, **dadurch gekennzeichnet, dass** das Sensorelement (9, 16, 17, 18) eine Vielzahl von diskreten, separat elektrisch kontaktierten drucksensitiven Flächenbereichen (9) aufweist, wobei die Kraftabgabefläche (8) eines Druckübersetzungselements (5, 6, 7, 8, 70, 120, 150) mit einer oder mehreren drucksensitiven Flächenbereichen (9) kraftübertragend gekoppelt ist und in angrenzenden umgebenden Flächenabschnitten dieser drucksensitiven Flächenbereiche (9) weitere drucksensitive Flächenbereiche (9) angeordnet sind.

12. Anströmrichtungssensoreinrichtung nach einem der vorhergehenden Ansprüche, **dadurch gekennzeichnet, dass** die Anströmrichtungssensoreinrichtung (1) als Anstellwinkelmessgerät und/oder als Schiebewinkelmessgerät für ein Flugzeug (10) ausgebildet ist.

13. Anströmrichtungserfassungseinrichtung mit wenigstens einer Anströmrichtungssensoreinrichtung (1) nach einem der vorhergehenden Ansprüche und wenigstens einer Auswerteeinrichtung (100), die mit der Anströmrichtungssensoreinrichtung (1) verbunden ist, wobei die Auswerteeinrichtung (100) dazu eingerichtet ist, Sensordaten von der Anströmrichtungssensoreinrichtung (1) zu empfangen und aus den Sensordaten einen Wert für die Anströmrichtung (2) zu bestimmen, mit der ein strömendes Medium die Anströmrichtungssensoreinrichtung (1) anströmt.

Fig. 1

Fig. 2

Fig. 3

Fig. 4

Fig. 5

Fig. 6

EP 2 667 200 A2

Fig. 7

Fig. 8

Fig. 9

EP 2 667 200 A2

Fig. 10

Fig. 11

Fig. 13

Fig. 12

EP 2 667 200 A2

Fig. 14

Fig. 15

Fig. 16